# EUROPEAN PATENT SPECIFICATION

(11) **EP 3 028 834 B1**
(45) Date of publication and mention of the grant of the patent: **27.12.2017**
(21) Application number: 15191153.4
(22) Date of filing: 23.10.2015
(51) Int. Cl.: B29C 45/76, B29C 45/77

(54) **INJECTION MOLDING MACHINE**
SPRITZGIESSMASCHINE
MACHINE DE MOULAGE À INJECTION

(30) Priority: 05.12.2014 JP 2014247245
(43) Date of publication of application: 08.06.2016
(73) Proprietor: SUMITOMO HEAVY INDUSTRIES, LTD., Tokyo 141-6025 (JP)
(72) Inventor: SUZUKI, Motofumi, Chiba 263-0001 (JP)
(74) Representative: Louis Pöhlau Lohrentz

(56) References cited:
- US-A- 5 356 575
- US-A- 5 993 704
- "OPTISCHES UMSCHALTEN", KUNSTSTOFFE, CARL HANSER VERLAG, MUNCHEN, DE, vol. 86, no. 7, 1 July 1996 (1996-07-01), page 1030, XP000597693, ISSN: 0023-5563
- JOHANNABER F ET AL: "Handbuch Spritzgiessen , PASSAGE", HANDBUCH SPRITZGIESSEN, XX, XX, 13 November 2001 (2001-11-13), pages 303,326-332, XP002288759,

## Description

### BACKGROUND OF THE INVENTION

### Field of the Invention

The present invention relates to an injection molding machine.

### Description of Related Art

Injection molding machines have an injection unit that fills the inside of a mold unit with a molding material, a controller that controls the injection unit, and the like. The injection unit has, for example, a cylinder, a nozzle, a screw, and an injection motor. The cylinder heats a molding material. The nozzle is provided at a front end of the cylinder, and is pressed against the mold unit. The screw is made movable forward and backward within the cylinder, and feeds the molding material in front of the screw from the cylinder. The injection motor moves the screw forward and backward. The controller carries out a filling process of driving the injection motor to control the speed of the screw, and a hold pressure process of driving the drive device to control pressure acting on the molding material from the screw (for example, refer to Japanese Unexamined Patent Application Publication No. 2011-183704).

US Patent US 5 993 704 discloses an injectionmoldingmachine in which two pressure sensors are disposed successively at intervals in the flow direction of the inflowing material, so that the material reaches them at different points in time. A steep temporal drop in the spatial pressure difference between the sensors is taken as an indication for switchover from the filling phase to the holding pressure phase.

US Patent US 5 356 575 discloses an injectionmoldingmachine with pressure sensors and with temperature sensors in the mold cavity and the extruder barrel. Switchover from injection phase to holding pressure phase is executed at a given target point of pressure, temperature and position of the screw, wherein this target point may be adjusted over time.

Moreover, the application of light sensors has been described in literature for determining the passage of molding material at a given position in the mold cavity, wherein switchover can be started after said determination ("OPTISCHES UMSCHALTEN", KUNSTSTOFFE, CARL HANSER VERLAG, MUNCHEN, DE, 1996-07-01, vol. 86, no. 7, PAGE 1030).

At the timing of switchover between the filling process and the hold pressure process, variations in the amount of filling during every injection were large, and variations in the quality of molding products were large in the prior art.

### SUMMARY OF THE INVENTION

The invention has been made in view of the above problems, and a main object thereof is to provide an injection molding machine that improves the quality of molding products.

In order to solve the above problems, according to an aspect, an injection molding machine according to claim 1 of the invention includes a cylinder that heats a molding material which is filled the inside of a mold unit; a feeding member that feeds the molding material within the cylinder; a drive device that moves the feeding member forward and backward; and a controller that carries out a filling process of driving the drive device to control the speed of the feeding member, and a hold pressure process of driving the drive device to control pressure acting on the molding material from the feeding member. The controller reduces the setting speed of the feeding member in the middle of the filling process, and performs switchover from the filling process to the hold pressure process on the basis of a detection result of a detector that detects the arrival of the molding material within the mold unit to a predetermined posit ion after the setting speed is reduced.

According to the aspect of the invention, the injectionmolding machine that can reduce variations in the quality of molding products is provided.

### BRIEF DESCRIPTION OF THE DRAWINGS

FIG. 1 is a view illustrating an injection molding machine according to an embodiment of the invention.
Fig. 2 is a view illustrating screw speed in a filling process according to the embodiment of the invention.

### DETAILED DESCRIPTION OF THE INVENTION

Although an embodiment for carrying out the invention will be described below with reference to the drawings, in the respective drawings, the same or corresponding components will be designated by the same or corresponding reference numerals, and the description thereof will be omitted.

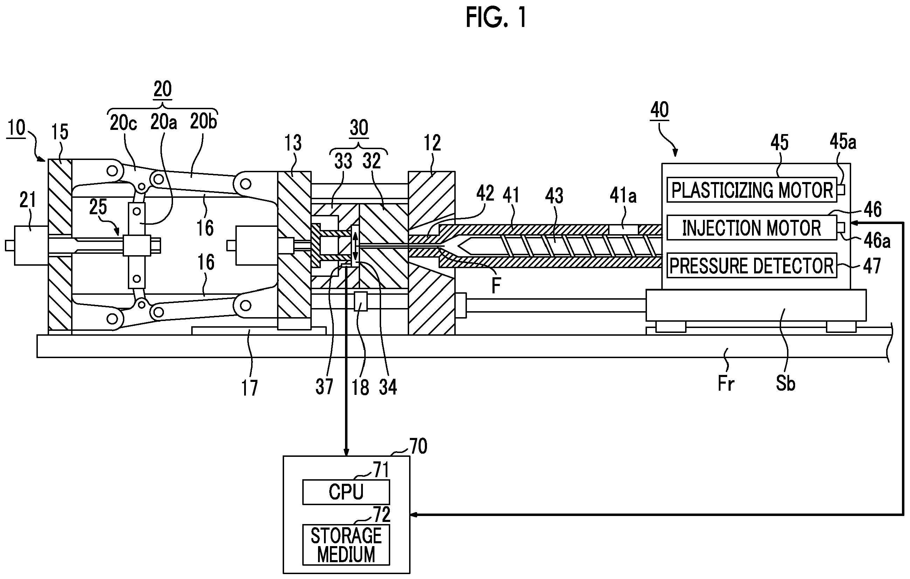

FIG. 1 is a view illustrating an injection molding machine according to an embodiment of the invention. In Fig. 1, arrow F indicates the flow of a molding material. The injection molding machine illustrated in Fig. 1 has a frame Fr, a mold clamping unit 10, an injection unit 40, a controller 70, and the like. The controller 70 has a central processing unit (CPU) 71, and a storage medium 72, such as a memory. The controller 70 makes the CPU 71 execute a program stored in the storage medium 72, thereby controlling the mold clamping unit 10 and the injection unit 40.

Next, the mold clamping unit 10 will be described. In the description of the mold clamping unit 10, a description will be made with a movement direction (rightward direction in FIG. 1) of a movable platen 13 during mold closing being the front and a movement direction (leftward direction in FIG. 1) of the movable platen 13 during mold opening being the rear.

The mold clamping unit 10 performs mold closing, mold clamping, and mold opening of a mold unit 30. The mold clamping unit 10 has a stationary platen 12, a movable platen 13, a rear platen 15, a tie-bar 16, a toggle mechanism 20, a mold clamping motor 21, and a motion conversion mechanism 25.

The stationary platen 12 is fixed to the frame Fr. A stationary mold 32 is attached to the surface of the stationary platen 12 that faces the movable platen 13.

The movable platen 13 is made movable along a guide (for example, a guide rail) 17 laid on the frame Fr, and is made movable forward and backward with respect to the stationary platen 12. A movable mold 33 is attached to the surface of the movable platen 13 that faces the stationary platen 12.

Mold closing, mold clamping, and mold opening are performed by moving the movable platen 13 forward and backward with respect to the stationary platen 12. The mold unit 30 is constituted of the stationary mold 32 and the movable mold 33.

The rear platen 15 is coupled to the stationary platen 12 at a distance therefrom, and is placed on the frame Fr so as to be movable in a mold opening/closing direction. In addition, the rear platen 15 may be made movable along with a guide laid on the frame Fr. The guide of the rear platen 15 may be shared by a guide 17 of the movable platen 13.

In addition, in the present embodiment, the stationary platen 12 is fixed to the frame Fr and the rear platen 15 is made movable in the mold opening/closing direction with respect to the frame Fr. However, the rear platen 15 may be fixed to the frame Fr and the stationary platen 12 may be made movable in the mold opening/closing direction with respect to the frame Fr.

The tie-bar 16 couples the stationary platen 12 and the rear platen 15 with a space therebetween. A plurality of tie-bars 16 may be used. Each tie-bar 16 is made parallel to the mold opening/closing direction, and is extended in response to clamping force. At least one tie-bar 16 is provided with a clamping force detector 18. The clamping force detector 18 may be a strain gauge type, and may detect the strain of the tie-bar 16, thereby detecting a clamping force.

In addition, the clamping force detector 18 is not limited to the strain gauge type, and may be a piezoelectric type, a capacitance type, a hydraulic type, an electromagnetic type, or the like, and the attachment position thereof is also not limited to the tie-bar 16.

The toggle mechanism 20 is disposed between the movable platen 13 and the rear platen 15. The toggle mechanism 20 is constituted of a cross-head 20a, a plurality of links 20b and 20c, and the like. One link 20b is rockably attached to the movable platen 13, and the other link 20c is rockably attached to the rear platen 15. The links 20b and 20c are bendably and stretchably coupled together by a pin or the like. By moving the cross-head 20a forward and backward, the plurality of links 20b and 20c are bent and stretched, and the movable platen 13 is moved forward and backward with respect to the rear platen 15.

The mold clamping motor 21 is attached to the rear platen 15, and the movable platen 13 is moved forward and backward by moving the cross-head 20a forward and backward. The motion conversion mechanism 25, which converts the rotational motion of the mold clamping motor 21 into a linear motion to transmit the converted linear motion to the cross-head 20a, is provided between the mold clamping motor 21 and the cross-head 20a. The motion conversion mechanism 25 is constituted of, for example, a ball screw mechanism.

The operation of the mold clamping unit 10 is controlled by the controller 70. The controller 70 controls a mold closing process, a mold clamping process, a mold opening process, and the like.

In the mold closing process, the movable mold 33 is brought into contact with the stationary mold 32 by driving the mold clamping motor 21 to move the movable platen 13 forward.

In the mold clamping process, a clamping force is generated by further driving the mold clamping motor 21. A cavity space 34 is formed between the movable mold 33 and the stationary mold 32 during mold clamping, and the cavity space 34 is filled with a liquid molding material. The molding material within the cavity space 34 is hardened and becomes a molding product.

In the mold opening process, the movable mold 33 is separated from the stationary mold 32 by driving the mold clamping motor 21 to move the movable platen 13 backward.

Next, the injection unit 40 will be described. In the description of the injection unit 40, unlike the description of the mold clamping unit 10, a description will be made with a movement direction (leftward direction in FIG. 1) of the screw 43 during filling being the front, and a movement direction (rightward direction of FIG. 1) of the screw 43 duringplasticizing being the rear.

The injection unit 40 is installed in a sliding base Sb that is movable forward and backward with respect to the frame Fr, and is movable forward and backward with respect to the mold unit 30. The injection unit 40 is touched on the mold unit 30, and the inside of the mold unit 30 is filled with a molding material. The injection unit 40 has, for example, a cylinder 41, a nozzle 42, a screw 43, a plasticizing motor 45, an injection motor 46, and a pressure detector 47.

The cylinder 41 heats the molding material supplied from a supply port 41a. The supply port 41a is formed at a rear part of the cylinder 41. Aheating source, such as a heater, is provided at the outer periphery of the cylinder 41.

The nozzle 42 is provided at a front end of the cylinder 41, and is pressed against the mold unit 30.

The screw 43 is a feeding member that feeds the molding material within the cylinder 41. The screw 43 is disposed within the cylinder 41 so as to be rotatable and movable forward and backward.

The plasticizing motor 45 rotates the screw 43, thereby feeding the molding material forward along a spiral groove of the screw 43. The molding material is gradually melted by the heat from the cylinder 41 while being fed forward. When the liquid molding material is fed to the front of the screw 43 and accumulated at a front part of the cylinder 41, the screw 43 is moved backward.

The injection motor 46 is a drive device that moves the screw 43 forward and backward. The injection motor 46 moves the screw 43 forward and backward, thereby filling the cavity space 34 of the mold unit 30 with the liquid molding material accumulated in front of the screw 43. Thereafter, the injection motor 46 pushes the screw 43 forward, and applies pressure to the molding material within the cavity space 34. An insufficient molding material can be replenished. A motion conversion mechanism that converts the rotational motion of the injection motor 46 into a linear motion of the screw 43 is provided between the injection motor 46 and the screw 43.

The pressure detector 47 is disposed, for example, between the injection motor 46 and the screw 43, and detects the pressure that the screw 43 receives from the molding material, back pressure to the screw 43, or the like. The pressure that the screw 43 receives from the molding material is equivalent to pressure acting on the molding material from the screw 43.

The operation of the injection unit 40 is controlled by the controller 70. The controller 70 controls the fillingprocess, the hold pressure process, a plasticizing process, or the like.

In the filling process, the injection motor 46 is driven to move the screw 43 forward at a setting speed, and the inside of the mold unit 30 is filled with the liquid molding material accumulated in front of the screw 43. The position or the speed of the screw 43 is detected by, for example, an encoder 46a of the injection motor 46. The hold pressure process is performed subsequent to the filling process.

In the hold pressure process, the injection motor 46 is driven to push the screw 43 forward with a setting pressure, and pressure is applied to the molding material within the mold unit 30. An insufficient molding material can be replenished. The pressure of the molding material is detected, for example, by the pressure detector 47. A cooling process is started after the hold pressure process. In the cooling process, hardening of the molding material within the cavity space 34 is performed. The plasticizing process may be performed during the cooling process.

In a plasticizing process, the plasticizing motor 45 is driven to rotate the screw 43 a set number of rotations, and feeds the molding material forward along the spiral groove of the screw 43. The molding material is gradually melted with this feeding. When the liquid molding material is fed to the front of the screw 43 and accumulated at a front part of the cylinder 41, the screw 43 is moved backward. The number of rotations of the screw 43 is detected, for example, by an encoder 45a of the plasticizing motor 45.

In the plasticizing process, the injection motor 46 is driven to apply a set back pressure to the screw 43 in order to limit sudden backward movement of the screw 43. The back pressure to the screw 43 is detected, for example, by the pressure detector 47. The plasticizing process is completed if the screw 43 moves backward to a predetermined position and a predetermined amount of the molding material is accumulated in front of the screw 43.

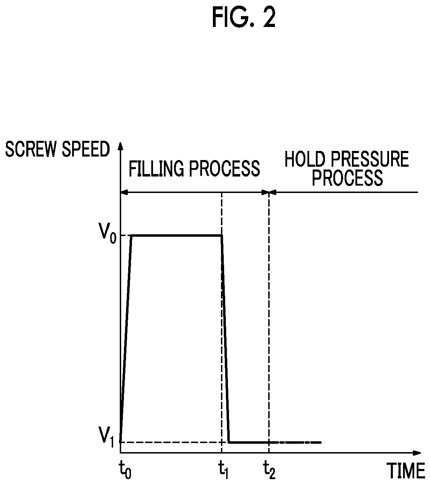

Fig. 2 is a view illustrating screw speed in the filling process according to the embodiment of the invention. In Fig. 2, the horizontal axis represents time and the vertical axis represents the screw speed.

The filling process is started at time to, and the setting speed of the screw 43 is set to V₀ (>0). The speed of the screw 43 being positive indicates forward movement of the screw 43, and the speed of the screw 43 being negative indicates backward movement of the screw 43.

At the time to, the screw 43 is moved forward at a setting speed V₀, and the inside of the mold unit 30 is filled with the molding material accumulated in front of the screw 43.

At time t₁ in the middle of the filling process, if the position of the screw 43 reaches a speed switchover position, the setting speed of the screw 43 is lowered from V₀ to V₁ (V₀ > V₁ > 0). The screw 43 is moved forward at a very slow speed, and the molding material is made to flow due mainly to residual pressure or the like. The peak pressure of the molding material in the filling process can be reduced, generation of flash can be reduced, and the clamping force can also be reduced. By virtue of the reduction of the clamping force, the gas escape in the mold unit 30 also becomes excellent, and poor transfer can be reduced.

In addition, although V₁ is made positive in Fig. 2, V₁ may be zero or negative. The absolute value of V₁ may be smaller than the absolute value of V₀, and the screw 43 may be stopped or moved backward at a very low speed. Even in these cases, the peak pressure of the molding material in the filling process can be reduced.

Meanwhile, the molding material is made to flow mainly due to residual pressure or the like after the time t₁ (hereinafter referred to as "speed switchover time t₁") when the setting speed of the screw 43 is lowered from V₀ to V₁. The flow front of the molding material moves regardless of the position of the screw 43 after the speed switchover time t₁.

The controller 70 performs switchover (so-called V/P switchover) from the filling process to the holdpressure process, on the basis of the detection result of the detector 37 after the speed switchover time t₁.

The detector 37 detects the arrival of the molding material within the mold unit 30 to a predetermined position. As the detector 37, for example, a temperature sensor or a pressure sensor is used. As the detector 37, both of the temperature sensor and the pressure detector may be used.

Since the molding material has a higher temperature than the mold unit 30 if the molding material reaches the installation position or its vicinity of the temperature sensor, the measurement value of the temperature sensor rises. The arrival of the molding material to a predetermined position can be detected from the rise of the measurement value of the temperature sensor. For example, it is supposed that, when the measurement value of the temperature sensor exceeds a set value, the molding material has reached the installation position or its vicinity of the temperature sensor. Otherwise, it is supposed that, when the time differential value of the measurement value of the temperature sensor exceeds a set value, the molding material has reached the installation position or its vicinity of the temperature sensor.

Since the pressure of the molding material acts on the pressure detector if the molding material reaches the installation position of the pressure sensor, the measurement value of the pressure sensor rises. The arrival of the molding material to a predetermined position can be detected from the rise of the measurement value of the pressure sensor. For example, it is supposed that, when the measurement value of the pressure sensor exceeds a set value, the molding material has reached the installation position of the pressure sensor. Otherwise, it is supposed that, when the time differential value of the measurement value of the pressure sensor exceeds a set value, the molding material has reached the installation position of the pressure sensor.

The detector 37, for example as illustrated in Fig. 1, is disposed at an end point or its vicinity of a flow path (specifically, the cavity space 34) for the molding material. In this case, the controller 70 performs the V/P switchover at time t₂ at which the arrival of the molding material has been detected by the detector 37.

In addition, although the detector 37 is disposed at the end point or its vicinity of the flow path for the molding material in Fig. 1, the detector may be disposed in the middle of the flow path for the molding material. In this case, the controller 70 predicts the flow front position of the molding material using the detector 37, and performs the V/P switchover on the basis of the prediction result. For example, the controller 70 measures the elapsed time after the arrival of the molding material to a predetermined position is detected by the detector 37, thereby predicting the flow front position of the molding material. As the elapsed time passes, the flow front of the molding material approaches the end point. If the elapsed time reaches a set time and the flow front of the molding material reaches the end point or its vicinity, the V/P switchover is performed. The set time is obtained by testing or the like.

In addition, the detector 37 is disposed both at the end point or its vicinity of the flow path for the molding material in Fig. 1 and in the middle of the flow path for the molding material. In this case, the controller 70 may perform the V/P switchover on the basis of the detection result of both of the detectors.

As described above, according to the present embodiment, the controller 70 performs the V/P switchover on the basis of the detection result of the detector 37. Since the V/P switchover is performed after the arrival of the molding material to a predetermined position is reliably detected by the detector 37, the variations in the amount of filling during every injection at the time of the V/P switchover can be reduced, and the variations in the quality of molding products can be reduced.

As in the present embodiment, when the setting speed of the screw 43 is lowered in the middle of the filling process and the molding material is made to flow mainly due to residual pressure or the like, the flow front position of the molding material cannot be predicted from the position of the screw 43. Therefore, the effect that the detector 37 detects the arrival of the molding material to a predetermined position is markedly obtained.

In addition, in Fig. 2, the setting speed of the screw 43 is constant from the time to at the start of the filling process to the speed switchover time t₁, and the setting speed may be changed. When the switchover of the setting speed of the screw 43 is performed two or more times in the filling process, the final switchover time may be the speed switchover time t₁.

Additionally, although the setting speed of the screw 43 is lowered in the middle of the filling process in Fig. 2, the setting speed may not be lowered, for example, and the setting speed of the screw 43 may be constant from the start of the filling process to the end thereof. Even in this case, by performing the V/P switchover after the arrival of the molding material to the predetermined position is reliably detected by the detector 37, the variations in the amount of filling during every injection at the time of the V/P switchover can be reduced, and the variations in the quality of molding products can be reduced.

Although the embodiment of the injection molding machine has been described above, the invention is not limited to the above-described embodiment, and various alterations and improvements can be made within the scope of the invention described in the claims.

For example, although the injection unit 40 of the above embodiment is an in-line screw type, the injection unit may be a preplasticization type. The preplasticization type injection unit supplies a molding material melted within a plasticizing cylinder to an injection cylinder, and injects the molding material into the mold unit from the injection cylinder. The screw is disposed inside the plasticizing cylinder so as to be rotatable or rotatable and movable forward and backward, and a plunger is disposed within the injection cylinder so as to be movable forward and backward. In this case, the plunger corresponds to a feeding member set forth in the claims, and the injection cylinder corresponds to a cylinder set forth in the claims.

Although the mold clamping unit 10 of the above embodiment has the mold clamping motor 21 as a driving source, the mold clamping unit may have a hydraulic cylinder instead of the mold clamping motor 21. Additionally, the mold clamping unit 10 may have a linear motor for mold opening and closing, and may have an electromagnet for mold clamping.

## Claims

1. An injection molding machine comprising:
acylinder (41) that heats amoldingmaterial which is filled with the inside of a mold unit (30);
a feeding member (43) that feeds the molding material within the cylinder (41);
a drive device (46) that moves the feeding member (43) forward and backward; and
a controller (70) that carries out a filling process of driving the drive device (46) to control the speed of the feeding member (43), and a hold pressure process of driving the drive device to control pressure acting on the molding material from the feeding member (43),
wherein the controller (70) is programmed to perform switchover from the filling process to the hold pressure process on the basis of a detection result of a detector (37) that detects the arrival of the molding material within the mold unit (30) to a predetermined position,
**characterized in that** the controller (70) is programmed to reduce the setting speed of the feeding member (43) in the middle of the filling process, and performs switchover from the filling process to the hold pressure process on the basis of the detection result of the detector (37) after the setting speed is reduced.

2. The injection molding machine according to Claim 1,
wherein the detector (37) is disposed at an end point or its vicinity of a flow path for the molding material, and
wherein the controller (70) is programmed to perform switchover from the filling process to the hold pressure process when the arrival of the molding material to the predetermined position has been detected by the detector (37).

3. The injection molding machine according to Claim 1 or 2,
wherein the detector (37) is disposed in the middle of a flow path for the molding material, and
wherein the controller (70) is programmed to predict a flow front position of the molding material using the detector (37), and to perform switchover from the filling process to the hold pressure process on the basis of the prediction result.

## Patentansprüche

1. Spritzgießmaschine, umfassend:
einen Zylinder (41), der einen Gießwerkstoff erhitzt, der in das Innere einer Formeinheit (30) gefüllt wird;
ein Zuführbauteil (43), das den Gießwerkstoff im Inneren des Zylinders (41) fördert; eine Antriebsvorrichtung (46), die das Zuführbauteil (43) nach vorn und nach hinten bewegt;
eine Steuerung (70), die einen Füllvorgang mittels Antreiben der Antriebsvorrichtung (46) zum Steuern der Geschwindigkeit des Zuführbauteils (43) und einen Druckhaltevorgang mittels Antreiben der Antriebsvorrichtung zum Steuern des Drucks, der von dem Zuführbauteil (43) auf den Gießwerkstoff ausgeübt wird, durchführt,
wobei die Steuerung (70) so programmiert ist, dass sie das Umschalten von dem Füllvorgang zu dem Druckhaltevorgang auf Grundlage der Größe der Änderung eines Detektionswertes des Detektors (37) durchführt, der das Ankommen des Gießwerkstoffes innerhalb der Formeinheit (30) an einer vorbestimmten Position detektiert,
**dadurch gekennzeichnet, dass** die Steuerung so programmiert ist, dass sie die eingestellte Geschwindigkeit des Zuführbauteils (43) in der Mitte des Füllvorgangs verringert und dass sie das Umschalten von dem Füllvorgang zu dem Druckhaltevorgang auf der Grundlage des Detektionswertes des Detektors (37) durchführt, nachdem die eingestellte Geschwindigkeit verringert wurde.

2. Die Spritzgießmaschine nach Anspruch 1, wobei der Detektor (37) an einem Endpunkt des Fließweges für den Gießwerkstoff oder in dessen Nachbarschaft angeordnet ist und wobei die Steuerung (70) so programmiert ist, dass sie sie das Umschalten von dem Füllvorgang zu dem Druckhaltevorgang durchführt, wenn die Ankunft des Gießwerkstoffes an der vorbestimmten Position durch den Detektor (37) festgestellt wurde.

3. Die Spritzgießmaschine nach Anspruch 1 oder 2, wobei der Detektor (37) in der Mitte eines Fließweges für den Gießwerkstoff angeordnet ist und wobei die Steuerung (70) so programmiert ist, dass sie unter Nutzung des Detektors (37) eine Position der Fließfront des Gießwerkstoffes vorhersagt, und dass sie das Umschalten von dem Füllvorgang zu dem Druckhaltevorgang auf der Grundlage des Vorhersageergebnisses durchführt.

## Revendications

1. Machine de moulage par injection comprenant :
un cylindre (41) qui chauffe un matériau de moulage qui remplit l'intérieur d'une unité de moule (30) ;
un élément d'alimentation (43) qui fournit le matériau de moulage dans le cylindre (41) ;
un dispositif d'entraînement (46) qui déplace l'élément d'alimentation (43) vers l'avant et vers l'arrière ; et
un contrôleur (70) qui exécute un processus de remplissage qui consiste à entraîner le dispositif d'entraînement (46) afin de réguler la vitesse de l'élément d'alimentation (43), et un processus de maintien de la pression qui consiste à entraîner le dispositif d'entraînement afin de réguler la pression qui agit sur le matériau de moulage qui provient de l'élément d'alimentation (43),
dans lequel le contrôleur (70) est programmé pour passer du processus de remplissage au processus de maintien de la pression sur la base d'un résultat de détection d'un détecteur (37) qui détecte l'arrivée du matériau de moulage dans l'unité de moule (30) à un endroit prédéterminé,
**caractérisée en ce que** le contrôleur (70) est programmé pour réduire la vitesse de réglage de l'élément d'alimentation (43) au milieu du processus de remplissage, et passe du processus de remplissage au processus de maintien de la pression sur la base du résultat de détection du détecteur (37) après que la vitesse de réglage a été réduite.

2. Machine de moulage par injection selon la revendication 1,
dans laquelle le détecteur (37) est disposé au niveau d'un point d'extrémité, ou à proximité de celui-ci, d'un trajet d'écoulement destiné au matériau de moulage, et
dans laquelle le contrôleur (70) est programmé pour passer du processus de remplissage au processus de maintien de la pression lorsque l'arrivée du matériau de moulage à l'endroit prédéterminé a été détectée par le détecteur (37).

3. Machine de moulage par injection selon la revendication 1 ou 2,
dans laquelle le détecteur (37) est disposé au milieu d'un trajet d'écoulement destiné au matériau de moulage, et
dans laquelle le contrôleur (70) est programmé pour prédire une position avant d'écoulement du matériau de moulage à l'aide du détecteur (37), et pour passer du processus de remplissage au processus de maintien de la pression sur la base du résultat de la prédiction.
